## Europäisches Patentamt

## European Patent Office

## Office européen des brevets

(19)

(11) Veröffentlichungsnummer: **0 009 830**
**B1**

(12) **EUROPÄISCHE PATENTSCHRIFT**

(45) Veröffentlichungstag der Patentschrift:
04.11.81

(21) Anmeldenummer: 79200293.3

(22) Anmeldetag: 11.06.79

(51) Int. Cl.³: **C 25 B 11/06, H 01 M 4/98, B 01 J 25/00**

(54) Verfahren zur Herstellung eines Bleches oder Bandes mit oberflächiger Katalysatorstruktur und Anwendung dieses Bleches.

(30) Priorität: 07.07.78 DE 2829901

(43) Veröffentlichungstag der Anmeldung:
16.04.80 Patentblatt 80/8

(45) Bekanntmachung des Hinweises auf die Patenterteilung:
04.11.81 Patentblatt 81/44

(84) Benannte Vertragsstaaten:
AT BE CH DE FR GB IT LU NL SE

(56) Entgegenhaltungen:
AT-B-206 867
DE-A-1 421 507
ELECTROCHEMICAL TECHNOLOGY, 4, 1966, 3/4, Seiten 175/176
D. M. DRAZIC, A. R. DESPIC und V. L. J. VUJCIC: »Mixed powder hydrogen electrode«.
EDUARD JUSTI »Hochbelastbare Wasserstoff-Diffusions-Elektroden für Betrieb bei Umgebungs-Temperatur und Niederdruck«.
Adademie der Wissenschaften und der Literatur in Mainz
Jahrgang 1959, Kap 7. 3, Sparelektroden, Seiten 732 — 735

(73) Patentinhaber: METALLGESELLSCHAFT AG,
Reuterweg 14 Postfach 3724, D-6000 Frankfurt/M.1 (DE)

(72) Erfinder: Lohrberg, Karl, Dipl.-Ing., Breslauer Strasse 1, D-6056 Heusenstamm (DE)
Erfinder: Wüllenweber, Heinz, Dipl.-Ing., Schweinfurter Weg 22, D-6000 Frankfurt/Main 70 (DE)
Erfinder: Müller, Jürgen, Dr. Dipl.-Chem., Am Kirchfeld 8, D-6367 Karben 2 (DE)
Erfinder: Sermond, Bernd, Jahnstrasse 3, D-6334 Asslar (DE)

(74) Vertreter: Fischer, Ernst, Dr., Reuterweg 14, D-6000 Frankfurt am Main 1 (DE)

### Verfahren zur Herstellung eines Bleches oder Bandes mit oberflächiger Katalysatorstruktur und Anwendung dieses Bleches

Die Erfindung betrifft ein Verfahren zur Herstellung eines Bleches oder Bandes mit oberflächiger Katalysatorstruktur, bei dem man auf das Ausgangsblech oder -band eine pulverförmiges Stützskelett-Material und pulverförmige Raney-Legierung im Verhältnis 1 : 3 bis 3 : 1 enthaltende Mischung aufbringt, anschließend aufwalzt, bei Temperaturen oberhalb 600°C in reduzierender Atmosphäre sintert und mit Lauge oder Säure die lösliche Komponente der Raney-Legierung herauslöst sowie die Anwendung des auf diese Weise hergestellten Bleches oder Bandes mit oberflächiger Katalysatorstruktur als Elektrode bei der Elektrolyse oder als Katalysator bei chemischen Reduktionsprozessen.

Doppelskelett-Katalysator-Elektroden (sogenannte DSK-Elektroden) besitzen eine hohe elektrische Leitfähigkeit und außerdem eine hohe katalytische Aktivität, so daß sie sich als elektroden in Elektrolyseuren unterschiedlichster Bauart, als Elektroden in Brennstoff-Elementen, aber auch als Katalysatoren für chemnische Reaktionen, für die Raney-Katalysatoren üblicherweise eingesetzt werden, eignen.

Ein Nachteil derartiger kompakter DSK-Elektroden ist, daß sie bei Fertigung in einer unter katalytischem Gesichtspunkt ausreichender Dikke von wenigen Zehntelmillimetern keine ausreichende mechanische Festigkeit besitzen. Die Fertigung in einer unter dem Gesichtspunkt der mechanischen Festigkeit ausreichenden Dicke hingegen ist wiederum mit einem unvertretbar hohen Aufwand von Katalysatormassen verbunden.

Um diesen Nachteil abzuhelfen, ist es bereits bekannt, einen kompakten oder porösen Metallkörper mit Katalysatormasse zu beschichten. Hierzu wird eine Mischung eines sogenannten als Träger dienenden Stützskeletts und einer Raney-Legierung auf den Metallkörper aufgebracht, dann aufgepreßt oder aufgewalzt, bei Temperaturen oberhalb vorzugsweise 600°C in reduzierender Atmosphäre gesintert und schließlich die lösliche Komponente der Raney-Legierung herausgelöst (AT-B 206 867). Dieses vorstehend skizzierte Verfahren ist von Vorteil, wenn die Verfestigung des Katalysator-Gemisches auf der Unterlage durch Aufpressen erfolgt. Bei den anzuwendenden Preßdrucken in der Größenordnung von 1 t/cm² ist im Hinblick auf einen vertretbaren technischen Aufwand jedoch nur die Fertigung kleinflächiger DSK-Elektroden möglich, so daß schon deswegen ihre Anwendung — insbesondere in Elektrolyseuren — erschwert oder nicht möglich ist. Die Verfestigung des Katalysator-Gemisches durch Aufwalzen auf kompakte Mantelflächen, das die Herstellung auch großflächiger DSK-Elektroden gestatten würde, ist indessen nicht durchführbar. Es wurde nämlich festgestellt, daß die Mischung aus Stützgerüstmaterial und Raney-Legierung durch den Aufwalzvorgang von der Metallfläche weggeschoben wird mit dem Ergebnis, daß entweder überhaupt keine oder allenfalls eine extrem dünne und damit unbrauchbare Katalysatorschicht aufbringbar ist.

Aufgabe der Erfindung ist es, ein Verfahren zur Herstellung eines Bleches oder Bandes mit oberflächiger Katalysatorstruktur bereitzustellen, das die bekannten, insbesondere vorgenannten Nachteile vermeidet, insbesondere die Herstellung großflächiger DSK-Elektroden gestattet und mit geringem technischem Aufwand durchführbar ist.

Die Aufgabe wird gelöst, indem das Verfahren der eingangs genannten Art entsprechend der Erfindung derart ausgestaltet wird, daß man das Aufwalzen der Mischung unter gleichzeitiger Kaltverformung des Bleches oder Bandes mit einem Verformungsgrad innerhalb einer Verformungsstufe von 20 bis 60% vornimmt.

Die Formulierung »mit einem Verformungsgrad innerhalb einer Verformungsstufe von 20 bis 60%« soll zum Ausdruck bringen, daß, gleichgültig, ob die Kaltverformung in einer oder mehreren Stufen vorgenommen wird, bei jeder Verfahrensstufe ein Verformungsgrad innerhalb des genannten Bereiches vorgenommen werden soll. Nur dann ist gewährleistet, daß eine gleichmäßige Beschichtung des Bleches oder Bandes erfolgt und die Haftung der erzeugten Katalysatormasse von hinreichender Höhe ist.

Das Ausgangsblech oder -band kann aus praktisch jedem beliebigen Metall bestehen. Insbesondere aus Kostengründen werden jedoch solche aus Eisen, Stahl, Kuper oder Nickel eingesetzt.

Als Metall für das Stützskelett-Material und die Raney-Legierung sind die an sich bekannten und beispielsweise in der AT-B 206 867 beschriebenen Materialien geeignet. Vorzugsweise werden hierfür als Stützskelett-Material Eisen, Nickel oder Kobalt und als Raney-Legierung solche auf Basis von Eisen, Nickel, Kobalt oder Silber eingesetzt.

Die Aufbringung von Stützskelett-Material und Raney-Legierung erfolgt zweckmäßigerweise in Form einer Suspension mit vorzugsweise einer Wasser/Alkohol-Mischung und einem Bindemittel, wie Stärke, in einer Menge von 0,25 Gew.-%. Das Gewichtsverhältnis Stützskelett-Material und Raney-Legierung zu Suspendiermittel sollte etwa im Bereich von (2 bis 4) : 1 liegen.

Im Anschluß an die Aufbringung der Suspension wird eine Trocknung zur Verdampfung des Suspendiermittels vorgenommen.

Die Haftung der fertiggestellten oberflächigen Katalysatorstruktur kann verbessert werden, wenn vor der Aufbringung von Stützskelett-Material und Raney-Legierung auf dem Blech oder Band eine Zwischenschicht, z. B. aus Eisen, Kobalt, Nickel, Blei, Silber oder Kupfer, erzeugt wird. Dies kann auf galvanischem Wege, aber auch durch Aufbringen des entsprechenden Metallsalzes mit anschließender Reduktion zu Metall geschehen.

Bei der Bemessung der auf die Flächeneinheit des Bleches oder Bandes aufzubringenden Mischungsmenge ist zu berücksichtigen, daß mit der Kaltverformung eine Vergrößerung der Band- oder Blechfläche verbunden ist. Beispielsweise bedeutet eine Kaltverformung mit einem Verformungsgrad von 50% praktisch die Verdoppelung der ursprünglichen Fläche. Um die gleiche Schichtdicke wie ohne Kaltverformung zu erzielen, wäre also im vorstehenden Beispiel pro Flächeneinheit des Ausgangsbleches oder -bandes die doppelte Mischungsmenge aufzubringen. Obgleich die Schichtdicke des oberflächigen Katalysators nach oben nicht begrenzt ist und im unteren Bereich durch die nachlassende Wirkung eine Grenze findet, ist der im Verhältnis von Wirksamkeit und Materialaufwand herausragende Vorteil dann gegeben, wenn man die Mischung in einer derartigen Menge aufbringt, daß beim Erzeugnis die Schichtdicke des oberflächigen Katalysators 10 bis 300 μm beträgt.

Analog der Wirkung der Kaltverformung auf die Schichtdicke des Katalysators ist auch die Wirkung auf die Dicke des Ausgangsbleches oder -bandes zu berücksichtigen. Bei einer beispielsweise aus Gründen der mechanischen Stabilität erwünschten bzw. vorgegebenen Dikke des verformten Bleches oder Bandes ist ein den Verformungsgrad zu berücksichtigendes, entsprechend dickeres Ausgangsblech oder -band einzusetzen.

Das Walzen unter gleichzeitiger Kaltverformung kann grundsätzlich in einer Stufe durchgeführt werden. Besonders vorteilhaft ist es jedoch, eine mehrstufige, vorzugsweise eine zweistufige, Kaltverformung vorzunehmen. Obgleich mehrfacher Auftrag der Mischung nach den einzelnen Verformungsstufen möglich ist, empfiehlt es sich auch bei mehrstufiger Kaltverformung, die gesamte erforderliche Mischungsmenge vor der ersten Kaltverformungsstufe aufzubringen.

Erfolgt die Kaltverformung in mehreren Stufen, ist es empfehlenswert, Zwischenglühungen in reduzierender Atmosphäre ähnlich der Sinterung, die insbesondere zwischen 600°C und 1000°C, vorzugsweise zwischen 700°C und 800°C, durchgeführt wird, vorzunehmen. Als reduzierende Atmosphäre kann selbstverständlich nur eine solche zugelassen werden, die mit der oberflächigen Katalysatorstruktur keine nachteilige Reaktion eingeht. Am geeignetsten ist Wasserstoff zur Bildung der reduzierenden Atmosphäre.

Mit Hilfe des erfindungsgemäßen Verfahrens können die Ausgangsbleche oder -bänder ein- oder zweiseitig beschichtet werden. Die zweiseitige Beschichtung erfolgt hierbei in mindestens zwei Kaltverformungsstufen. Dabei wird zunächst die Mischung auf die eine Seite aufgebracht und dann eine Kaltverformung vorgenommen, sodann die zweite Seite mit der Mischung erneut verformt. Eventuelle weitere Verformungen, Zwischenglühungen sowie die Sinterung erfolgen dann naturgemäß für beide Schichten gemeinsam.

Das Aufwalzen unter gleichzeitiger Kaltverformung geschieht in der bei der Kaltverformung üblichen Weise, zweckmäßigerweise durch ein Druckwalzenpaar, das in einem Walzgerüst installiert ist. Der erforderliche Walzendruck bestimmt sich in erster Linie aus der Beschaffenheit des Ausgangsbleches oder -bandes. So ist beispielsweise bei der Verformung eines Stahles der Qualität ST 37.2 ein Walzendruck von mindestens 3,37 t/cm² erforderlich.

Im Verfahrensgang der Herstellung des Bleches oder Bandes mit oberflächiger Katalysatorstruktur ist eine Sinterung in reduzierender Atmosphäre unerläßlich. Diese Sinterung kann mit der Zwischenglühung — sofern zur Erleichterung weiterer Verformungsschritte vorgesehen — zu einem Verfahrensschritt zusammengefaßt werden. Sofern eine Zwischenglühung nicht beabsichtigt ist, erfolgt die Sinterung im Anschluß an die Verformung vor der Laugung der löslichen Raney-Legierungskomponente. Sinterung und Laugung geschehen in an sich bekannter Weise, beispielsweise wie in der AT-B 206 867 beschrieben, wobei die Sinterung in Wasserstoffatmosphäre und die Laugung mittels Alkalilauge bevorzugt ist.

Die nach dem erfindungsgemäßen Verfahren hergestellten und mit oberflächiger Katalysatorstruktur versehenen Bleche oder Bänder können je nach Anwendungsfall auf die gewünschte und beliebige Größe geschnitten oder zu sphärischen Körpern verformt werden. Es ist auch möglich, in den beschichteten Blechen oder Bändern durch U-Schlitzen zungenförmig hochgebogene Laschen zu erzeugen, die z. B. bei der Verwendung der Verfahrenserzeugnisse als Elektroden bei Diaphragma- bzw. Membranzellen die Abstandshalter und Auflage für das Diaphragma bzw. die Membran bilden.

Ist die vorgesehene Formgebung mit einer hohen Biegebeanspruchung, z. B. bei der Herstellung von rohrabschnittähnlichen Katalysatorteilen, verbunden, empfiehlt sich das Aufwalzen der Mischung von Stützsketell-Material und Raney-Legierung bei einem Grad der Kaltverformung, der im oberen beanspruchten Bereich, d. h. bei etwa 50 bis 60%, liegt.

Die nach dem erfindungsgemäßen Verfahren hergestellten Bleche oder Bänder mit oberflächiger Katalysatorstruktur können als solche, oder nachdem sie auf die gewünschte Größe und/ oder Form gebracht worden sind, auch für die Operationen eingesetzt werden, für die DSK-Elektroden üblicherweise verwendet werden. Besonders geeignete Anwendungsfälle sind Elektroden bei der Elektrolyse, vorzugsweise bei der Chloralkali- und Wasserelektrolyse sowie der elektrolytischen Herstellung von Salzen der Chlorsauerstoffsäuren, und als Katalysator bei chemischen Redoxprozessen.

Die Erfindung wird anhand der Beispiele beispielsweise und näher erläutert.

### Beispiel 1

Als zu beschichtendes Ausgangsblech diente ein solches aus Stahl ST 37 (warm gewalzter Stahl) mit den Abmessungen 150 × 200 × 3 mm. Es wurde zur Reinigung mit Stahlkies gestrahlt, mit einer Stahlbürste behandelt und mit Perchloräthylen entfettet.

Anschließend wurde eine Seite des Bleches auf einer Fläche von 130 × 165 mm mit 12 g einer Mischung von

| | |
|---|---|
| 42 Gew.-% | Raney-Nickel-Legierung (Al : Ni = 1 : 1) |
| 7,5 Gew.-% | Molybdän |
| 0,5 Gew.-% | Titan |
| 50 Gew.-% | Mond-Nickel (Carbonyl-Nickel) in |
| 1,5 g | Wasser und |
| 3 g | Spiritus mit |
| 30 mg | Stärke |

zu einer Suspension angerührt und unter Verwendung eines Abstreifers beschichtet. Dann wurde bei 100° C im Trockenschrank getrocknet. Sodann wurde durch Walzen im ersten Stich eine Dickenreduktion um 30% und im zweiten Stich eine solche von 50% (bezogen auf den Zustand vor dem ersten Stich) herbeigeführt.

Das erhaltene Blech wurde 30 Min. bei 750° C in Wasserstoffatmosphäre behandelt und anschließend in einem dritten Stich auf insgesamt 75% verformt.

Die Abmessungen des Ausgangsbleches waren dann 152 × 750 × 0,75 mm.

Auf jeder Längsseite des Bleches wurden 11 mm abgeschnitten (verbleibende Blechbreite 130 mm) und durch **U**-Schlitzen zungenförmige Laschen von 3 mm Breite und 2 mm Tiefe herausgedrückt. Danach erfolgte die Herauslösung des Aluminiums mittels 25%iger Kalilauge.

Es wurde ein Blech erhalten, dessen oberflächige Katalysatorstruktur 200 μm Dicke und eine einwandfreie Haftung besaß. Bei Einsatz als Kathode in der Wasserelektrolyse betrug — bei einer Stromdichte von 2000 A/m² — die gegen eine Normalwasserstoffelektrode gemessene Wasserstoffüberspannung 25 mV.

### Beispiel 2

Es wurde ein Blech der in Beispiel 1 genannten Beschaffenheit mit den Abmessungen 200 × 75 × 3 mm beschichtet, nachdem eine Reinigung, wie in Beispiel 1, vorgenommen worden war.

Danach wurde eine Seite des Bleches auf einer Fläche von 165 × 50 mit 4 g einer Mischung von

| | |
|---|---|
| 50% | Mond-Nickel und |
| 50% | Raney-Silber-Legierung (Al : Ag = 1 : 1) in |
| 0,5 g | Wasser und |
| 1 g | Spiritus mit |
| 10 mg | Stärke |

zu einer Suspension angerührt und unter Verwendung eines Abstreifers beschichtet. Die Trocknung erfolgte bei 100° C im Trockenschrank. Anschließend wurde durch Walzen im ersten Stich eine Dickenreduktion um 35% und im zweiten Stich eine solche von 50% (bezogen auf den Zustand vor dem ersten Stich) herbeigeführt.

Das erhaltene Blech wurde in Wasserstoffatmosphäre bei 700° C während 30 Min. gesintert und anschließend in einem dritten Stich auf insgesamt 75% verformt. Im Anschluß an die Verformung waren die Abmessungen des Ausgangsbleches 730 × 76 × 0,77 mm.

Aus dem hergestellten Blech mit oberflächiger Katalysatorstruktur wurde ein Prüfplättchen mit 14 mm Durchmesser herausgestanzt und mittels 25%iger Kalilauge zwecks Entfernung des Aluminiums behandelt.

Die oberflächige Katalysatorstruktur besaß eine Dicke von 40 μm und eine einwandfreie Haftung. Bei Einsatz als Anode in der Wasserelektrolyse betrug — bei einer Stromdichte von 2000 A/m² — die gegen eine Normalwasserstoffelektrode gemessene Abscheidungsspannung 1,5 V.

### Patentansprüche

1. Verfahren zur Herstellung eines Bleches oder Bandes mit oberflächiger Katalysatorstruktur, bei dem man auf das Ausgangsblech oder -band eine pulverförmiges Stützskelett-Material und pulverförmige Raney-Legierung im Verhältnis 1 : 3 bis 3 : 1 enthaltende Mischung aufbringt, anschließend aufwalzt, bei Temperaturen oberhalb 600° C in reduzierender Atmosphäre sintert und mit Lauge oder Säure die lösliche Komponente der Raney-Legierung herauslöst, dadurch gekennzeichnet, daß man das Aufwalzen der Mischung unter gleichzeitiger Kaltverformung des Bleches oder Bandes mit einem Verformungsgrad innerhalb einer Verformungsstufe von 20 bis 60% vornimmt.

2. Verfahren nach Anspruch 1, dadurch gekennzeichnet, daß man als Ausgangsblech oder -band ein solches aus Eisen, Stahl, Kupfer oder Nickel einsetzt.

3. Verfahren nach Anspruch 1 oder 2, dadurch gekennzeichnet, daß man als Stützskelett-Material Eisen, Nickel oder Kobalt einsetzt.

4. Verfahren nach Anspruch 1, 2 oder 3, dadurch gekennzeichnet, daß man als Raney-Legierung eine solche auf Basis von Eisen, Nickel, Kobalt oder Silber einsetzt.

5. Verfahren nach einem oder mehreren der Ansprüche 1 bis 4, dadurch gekennzeichnet, daß man die Mischung in einer derartigen Menge aufbringt, daß beim fertigen Erzeugnis die Schichtdicke der oberflächigen Katalysatorstruktur 10 bis 300 μm beträgt.

6. Verfahren nach einem oder mehreren der Ansprüche 1 bis 5, dadurch gekennzeichnet, daß man die Kaltverformung in mehreren, vorzugsweise zwei, Stufen vornimmt.

7. Verfahren nach einem oder mehreren der Ansprüche 1 bis 6, dadurch gekennzeichnet, daß man zwischen den Kaltverformungsstufen eine Zwischenglühung in reduzierender Atmosphäre vornimmt.

8. Verfahren nach einem oder mehreren der Ansprüche 1 bis 7, dadurch gekennzeichnet, daß man die Sinterung zwischen 600 und 1000° C, vorzugsweise zwischen 700 und 800° C, durchführt.

9. Anwendung der nach dem Verfahren gemäß einem oder mehreren der Ansprüche 1 bis 8 hergestellten Bleche oder Bänder mit oberflächiger Katalysatorstruktur, gegebenenfalls nach bestimmter Formgebung, als Elektrode bei der Elektrolyse, vorzugsweise bei der Chloralkali- und Wasser-Elektrolyse sowie der elektrolytischen Herstellung von Salzen der chlorsauerstoffsäure.

10. Anwendung der nach dem Verfahren gemäß einem oder mehreren der Ansprüche 1 bis 8 hergestellten Bleche oder Bänder mit oberflächiger Katalysatorstruktur, gegebenenfalls nach bestimmter Formgebung, als Katalysator bei chemischen Redoxprozessen.

## Claims

1. A process of manufacturing sheet metal elements or strip having a catalytic surface structure, in which a mixture containing skeleton powder and Raney alloy powder in a ratio of 1 ; 3 to 3 : 1 ist applied to a starting sheet metal element or starting strip and bonded thereto by roll cladding and is subsequently sintered in a reducing atmosphere at temperatures above 600° C, and the soluble component of the Raney alloy is dissolved out by a treatment with an alkaline or acid solution, characterized in that the process of the kind described first hereinbefore is improved according to the invention so that the mixture is bonded to the sheet metal element or strip by roll cladding and said sheet metal element or strip is cold-formed at the same time with a deformation of 20 to 60% in one forming step.

2. A process according to claim 1, characterized in that a starting sheet metal element or starting strip is used which consists of iron, steel, copper or nickel.

3. A process according to claim 1 or 2, characterized in that iron, nickel or cobalt is used a skeleton material.

4. A process according to claim 1, 2 or 3, characterized in that an iron-, nickel-, cobalt- or silver-base Raney alloy is used.

5. A process according to any of claims 1 to 4, characterized in that the mixture is applied in such a quantity that the catalytic surface structurer of the finished product has a thickness of 10 to 300 microns.

6. A process according to any of claims 1 to 5, characterized in that cold-forming is carried out in a plurality of steps, preferably in two steps.

7. A process according to any of claims 1 to 6, characterized in that an interstage annealing treatment in a reducing atmosphere is carried out between the cold-forming steps.

8. A process according to any of claims 1 to 7, characterized in that sintering is effected at temperatures between 600 and 1000° C, preferably between 700 and 800° C.

9. The use of sheet metal elements or strip manufactured by a process according to any of claims 1 to 8 and having a catlytic surface structure and having been subjected to specific shaping operations, if desired, as an electrode in electrolysis, preferably in the electrolysis of alkali chloride or of water, and in the electrolytic production of salts of oxyacids of chlorine.

10. The use of sheet metal elements or strip manufactured by a process according to any of claims 1 to 8 and having a catalytic surface structure and having been subjected to specific shaping operations, if desired, as a catalyst in chemical oxidation-reduction processes.

## Revendications

1. Procédé pour la production d'une tôle ou d'une bande présentant une structure catalytique superficielle dans lequel on dépose sur la tôle ou la bande de départ, un mélange d'un matériau de squelette de support pulvérulent et un alliage de Raney pulvérulent dans un rapport 1 : 3 à 3 : 1, après quoi on procède à un laminage, fritte à des températures supérieures à 600° C sous atmosphère réductrice et extrait à l'aide d'une lessive caustique ou à l'aide d'acides les constituants solubles de l'alliage Raney, caractérisé en ce que le laminage du mélange se produit avec une déformation à froid simultanée de la tôle ou de la bande avec un degré de déformation dans une étape de déformation, de 20 à 60%.

2. Procédé selon la revendication 1 caractérisé en ce qu'on utilise comme tôle ou bande de départ, une tôle ou bande de fer, d'acier, de cuivre ou de nickel.

3. Procédé selon la revendication 1 ou 2 caractérisé en ce qu'on utilise comme matériau de squelette de support, du fer, du nickel ou du cobalt.

4. Procédé selon la revendication 1, 2 ou 3 caractérisé en ce qu'on utilise comme alliage de Raney, un alliage à base de fer, nickel, cobalt ou argent.

5. Procédé selon une ou plusieurs des revendications 1 à 4 caractérisé en ce qu'on dépose la mélange en des quantités telles que pour le produit fini, l'épaisseur de couche de la structure catalytique superficielle représente de 10 à 300 μm.

6. Procédé selon ou plusieurs des revendications 1 à 5 caractérisé en ce que la déformation à froid s'effectue en plusieurs étapes, de préférence en 2 étapes.

7. Procédé selon une ou plusieurs des revendications 1 à 6 caractérisé en ce qu'entre les étapes de déformation à froid, on effectue un reciut intermédiaire en atmosphère réductrice.

8. Procédé selon l'une ou plusieurs des revendications 1 à 7 caractérisé en ce qu'on effectue le frittage entre 600 et 1000°C, de préférence entre 700 et 800°C.

9. Application des tôles ou bandes à structure catalytique superficielle produites selon une ou plusieurs des revendications 1 à 8, éventuellement après une mise en forme déterminée, comme électrode lors de l'électrolyse, de préférence lors de l'électrolyse de chlorures alcalins ou d'eau de même que lors de la production électrolytique de sels des oxyacides du chlore.

10. Application des tôles ou bandes à structure catalytique superficielle produites par le procédé d'une ou plusieurs des revendications 1 à 8, éventuellement après une mise en forme déterminée, comme catalyseurs lors d'opérations d'oxydo-réduction chimiques.